# EUROPEAN PATENT SPECIFICATION

(11) **EP 4 475 306 B1**
(45) Date of publication and mention of the grant of the patent: **22.07.2026**
(21) Application number: 23799728.3
(22) Date of filing: 04.05.2023
(51) Int. Cl.: H01M 50/251, H01M 50/262, H01M 50/209, H01M 50/258

(54) **BATTERY CONTAINER AND ENERGY STORAGE SYSTEM INCLUDING THE SAME**
BATTERIEBEHÄLTER UND ENERGIESPEICHERSYSTEM DAMIT
CONTENEUR DE BATTERIES ET SYSTÈME DE STOCKAGE D'ÉNERGIE LE INCLUANT

(30) Priority: 06.05.2022 KR 20220055923
(43) Date of publication of application: 11.12.2024
(73) Proprietor: LG Energy Solution, Ltd., Seoul 07335 (KR)
(72) Inventor: KIM, Yo-Hwan, Daejeon 34122 (KR); KIM, Ji-Hun, Daejeon 34122 (KR); PARK, Hong-Jae, Daejeon 34122 (KR); YANG, Mun-Seok, Daejeon 34122 (KR); YOON, Sung-Han, Daejeon 34122 (KR); LEE, Seung-Jun, Daejeon 34122 (KR); LEE, Ji-Won, Daejeon 34122 (KR); LEE, Hyun-Min, Daejeon 34122 (KR); LEE, Hyung-Uk, Daejeon 34122 (KR); CHO, Tae-Shin, Daejeon 34122 (KR)
(74) Representative: Plasseraud IP
(86) International application number: PCT/KR2023/006168
(87) International publication number: WO 2023/214847

(56) References cited:
- EP-A1- 3 783 731
- EP-A2- 2 685 519
- KR-A- 20110 073 221
- KR-A- 20150 145 564
- KR-A- 20190 073 447
- KR-A- 20220 043 063
- KR-B1- 102 159 975
- US-B1- 6 364 584

## Description

### TECHNICAL FIELD

The present disclosure relates to a battery container and an energy storage system including the same, and more specifically, to a battery container with improved energy density and an energy storage system including the same. The present application claims priority to Korean Patent Application No. 10-2022-0055923 filed on May 6, 2022 in the Republic of Korea.

### BACKGROUND ART

Currently commercialized secondary batteries include nickel cadmium batteries, nickel hydrogen batteries, nickel zinc batteries, and lithium secondary batteries. Among them, lithium secondary batteries are in the spotlight since they can be freely charged and discharged due to little memory effect compared to nickel-based secondary batteries and have very low discharge rate and high energy density.

The lithium secondary battery mainly uses lithium-based oxide and carbon material as a positive electrode active material and a negative electrode active material, respectively. The lithium secondary battery includes an electrode assembly in which a positive electrode plate and a negative electrode plate coated with a positive electrode active material and a negative electrode active material are disposed with a separator interposed therebetween, and an exterior, namely a battery case, that seals and accommodates the electrode assembly along with an electrolyte solution.

Generally, lithium secondary batteries may be classified into can-type secondary batteries in which the electrode assembly is included in a metal can and pouch-type secondary batteries in which the electrode assembly is included in a pouch of an aluminum laminate sheet, depending on the shape of the exterior.

The secondary battery may be used alone, but in many cases, the secondary battery is generally configured to include a plurality of secondary batteries electrically connected to each other in series and/or parallel. In particular, a plurality of secondary batteries may be electrically connected to each other and accommodated inside one module case to form one battery module. In addition, the battery module may be used alone, or two or more battery modules may be electrically connected to each other in series and/or parallel to form a higher-level device such as a battery rack or a battery pack.

Recently, as issues such as power shortage and eco-friendly energy have emerged, an energy storage system (ESS) for storing generated power is receiving more attention. For example, the smart grid system is being proposed as one of ways to control power supply and demand. The amount of electricity used by consumers is not always constant and may fluctuate from time to time. A representative example is that the amount of power usage increases rapidly during the summer afternoon due to the use of air conditioning devices, and then rapidly decreases at night. In this way, in view of power consumers, the power consumption is not constant and may fluctuate frequently, but in view of power suppliers, even if the power generation is controlled to some extent, it is realistically difficult to match such power consumption. Therefore, due to the imbalance between power supply and consumption, surplus power supply or power supply shortage may occur, and the smart grid system may flexibly store and control power to solve such problems. The smart grid system may be regarded as a concept that stores power at time points or areas in which surplus power is generated and supplies the stored power at time points or areas in which power shortage occurs. One of key components to construct such a smart grid system may be an energy storage system for storing power. In addition, as the commercialization of electric vehicles progresses in earnest in recent years, power storage devices may be utilized in facilities for charging electric vehicles, such as charging stations.

The energy storage system may be typically configured to include a large number of battery containers to secure a huge charging and discharging capacity. In addition, each battery container may include a plurality of battery racks, and each battery rack may include a plurality of battery modules.

The battery container may require a variety of performances. In particular, in the energy storage system (ESS), a plurality of battery containers may be installed to be connected to each other. However, in the conventional energy storage system, there is no connection and load support structure for stacking a plurality of battery containers, so it is difficult to configure more battery containers when the ground for placing battery containers is limited.

Document KR 2022/0043063 discloses a battery rack, a power storing device, and a power generating system capable of being easily installed of the related art.

Document EP 2 685 519 A2 discloses a battery container which may stably support a plurality of battery modules and facilitate the stacking and separation of the battery modules.

Document EP 3 783 731 A1 discloses an energy storage system having a structure capable of dissipating heat to adjacent battery modules.

### DISCLOSURE

### Technical Problem

The present disclosure is designed to solve the problems of the related art, and therefore the present disclosure is directed to providing a battery container with improved energy density for a limited ground, and an energy storage system including the same.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery container as defined in the appended claims.

In another aspect of the present disclosure, there is also provided an energy storage system, comprising at least one battery container as described above.

### Advantageous Effects

According to an embodiment of the present disclosure, when different container bodies are coupled in the vertical direction, the vertical load of the container body may be stably supported.

In addition, according to an embodiment of the present disclosure, since container bodies may be stably stacked on the same ground, the energy density of the battery containers may be improved for a limited ground.

In addition, several other additional effects may be achieved by various embodiments of the present disclosure. Various effects of the present disclosure will be described in detail in each embodiment, or the effects that can be easily understood by those skilled in the art will be not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing an energy storage system according to an embodiment of the present disclosure.
FIG. 2 is a perspective view showing the overall shape of a battery container provided in the energy storage system of FIG. 1.
FIG. 3 is a front view showing the battery container of FIG. 2.
FIG. 4 is a side view showing the battery container of FIG. 2.
FIG. 5 is a top view showing the battery container of FIG. 2.
FIG. 6 is a bottom view showing the battery container of FIG. 2.
FIG. 7 is an enlarged view showing the portion A of FIG. 2.
FIG. 8 is an enlarged view showing the portion B of FIG. 2.
FIG. 9 is an enlarged view showing the portion C of FIG. 2.
FIG. 10 is a diagram showing a first support bracket in FIG. 9 in detail.
FIG. 11 is an enlarged view showing the portion D of FIG. 2.
FIG. 12 is a diagram showing a second support bracket in FIG. 11 in detail.
FIG. 13 is an enlarged view showing the portion L of FIG. 1.
FIG. 14 is a diagram showing a connection member in FIG. 13 in detail.
FIG. 15 is a diagram for illustrating a state in which a load support unit supports the load of two different container bodies.
FIG. 16 is an enlarged view of part E of FIG. 2.
FIG. 17 is a diagram showing a support plate of FIG. 16 in detail.
FIG. 18 is a diagram showing a fixing member of FIG. 16 in detail.
FIG. 19 is a diagram for illustrating the relationship between the support plate and the load support unit of FIG. 16.
FIGS. 20 to 23 are diagrams showing a battery container according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

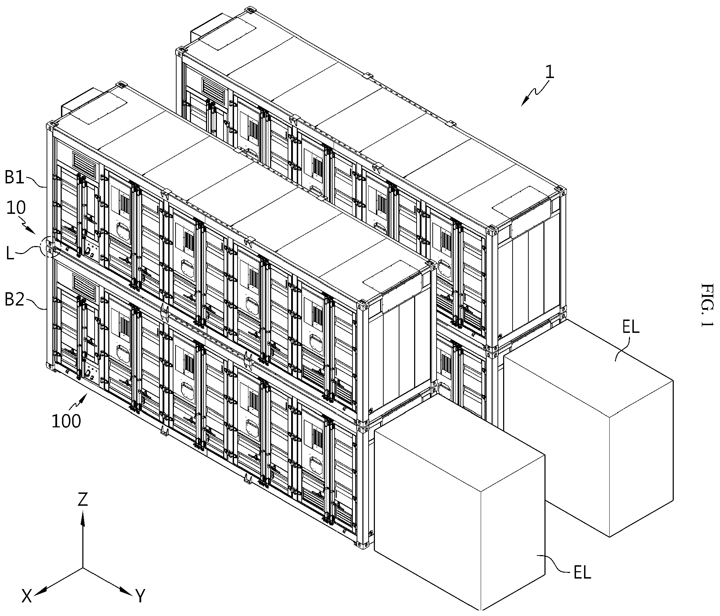

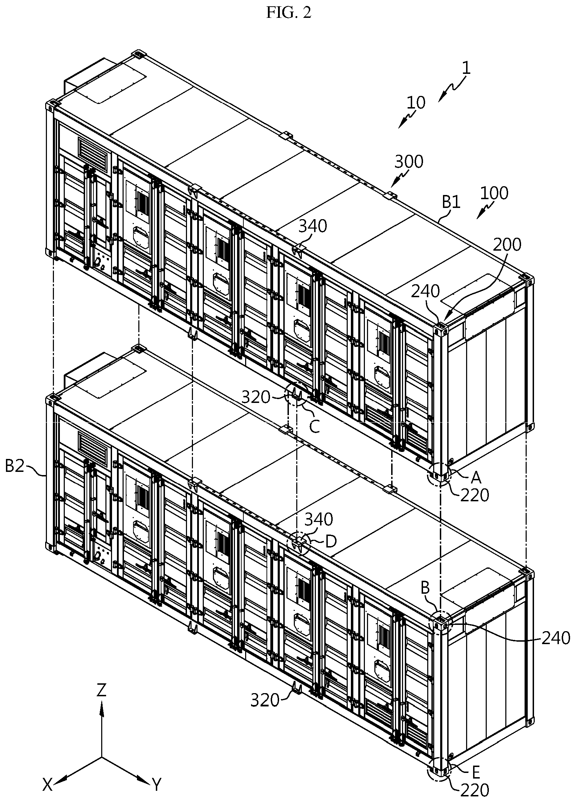

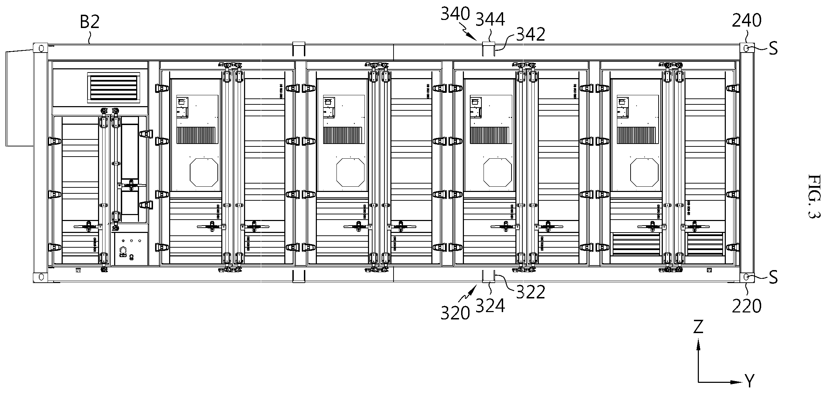

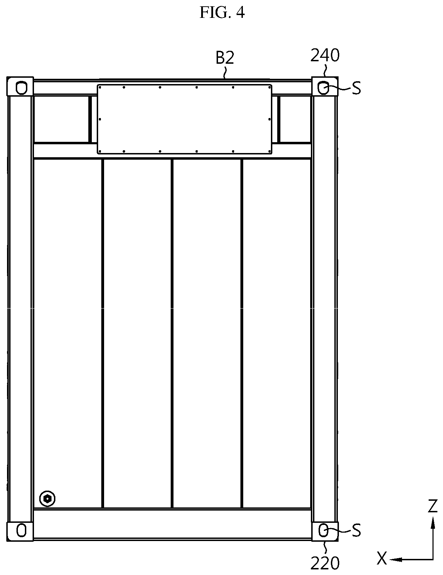

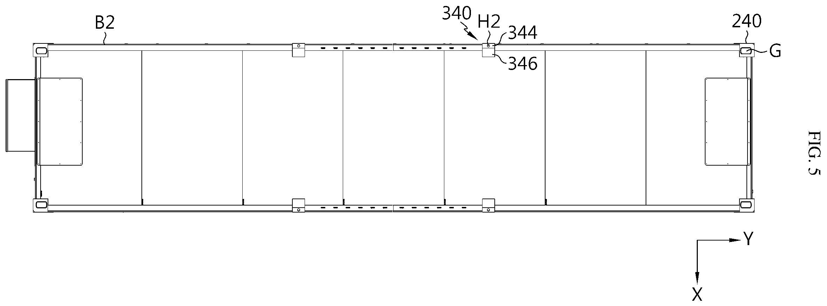

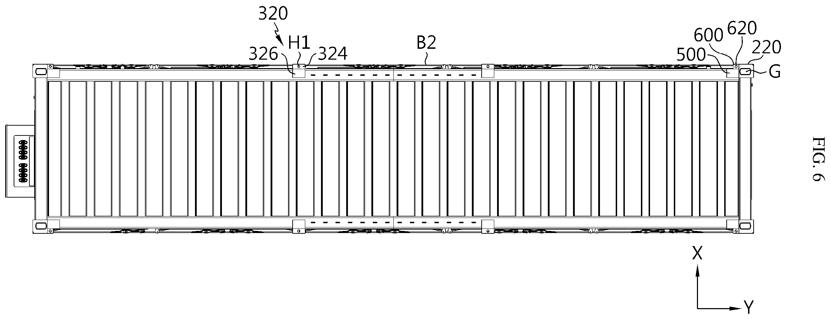

FIG. 1 is a diagram showing an energy storage system 1 according to an embodiment of the present disclosure, FIG. 2 is a perspective view showing the overall shape of a battery container 10 provided in the energy storage system 1 of FIG. 1, FIG. 3 is a front view showing the battery container 10 of FIG. 2, FIG. 4 is a side view showing the battery container 10 of FIG. 2, FIG. 5 is a top view showing the battery container 10 of FIG. 2, and FIG. 6 is a bottom view showing the battery container 10 of FIG. 2. At this time, FIGS. 3 to 6 exemplarily show only a second battery container B2, explained later.

In the embodiment of the present disclosure, X-axis direction shown in the drawing may refer to a width direction, Y-axis direction may refer to a length direction perpendicular to the X-axis direction on the horizontal plane (X-Y plane), and Z-axis direction may refer to a vertical direction perpendicular to both the X-axis direction and the Y-axis direction.

Referring to FIGS. 1 to 6, the energy storage system 1 according to an embodiment of the present disclosure includes a battery container 10.

The energy storage system 1 may form a link group by combining a certain number of battery containers 10 and a control container (E-Link, EL). This will be explained in detail below.

The battery container 10 described above may include a container body 100, a coupling unit 200, and a load support unit 300.

The container body 100 may include a plurality of battery racks therein. To this end, the container body 100 may have an accommodation space to accommodate the battery racks described above. As an example, the container body 100 may be made of a metal material such as steel.

The battery rack may be configured to include a plurality of battery modules stacked. Here, each battery module may be configured to include a plurality of battery cells (secondary batteries) accommodated in a module case. **In** addition, the battery modules may be accommodated in a rack case and stacked in at least one direction. For example, the battery modules may be configured to be stacked vertically through the rack case.

Alternatively, the container body 100 may accommodate a plurality of battery modules therein by constructing a separate structure therein for fixing the plurality of battery modules, without including the battery rack described above.

The coupling unit 200 may be configured to couple different container bodies 100.

**In** one embodiment, different container bodies 100 may be arranged to be stacked in a vertical direction. At least two container bodies 100 may be arranged to be stacked in a vertical direction. At this time, the container bodies 100 may be stacked in the vertical direction on the same ground.

The container body 100 may, by way of example, include a first container body B1 and a second container body B2. At this time, the second container body B2 may be located lower than the first container body B1. **In** particular, the second container body B2 may be located on the ground.

The load support unit 300 may be configured to support the vertical load of the container body 100. As an example, the load support unit 300 may be provided in the form of a bracket, but is not limited thereto. In addition, the load support unit 300 may be integrally provided with the container body 100 or may be configured as a separate member.

The load support unit 300 may be provided in a portion of the container body 100 that is different from the portion where the coupling unit 200 for coupling different container bodies 100 is located. Accordingly, the structural rigidity of the remaining portion of the container body 100, excluding the portion where the coupling unit 200 is located, may be reinforced.

According to this embodiment of the present disclosure, when different container bodies 100 are coupled in the vertical direction, the vertical load of the container body 100 may be stably supported.

In addition, since the container bodies 100 may be stably stacked on the same ground, the energy density of the battery containers 10 may be improved in a limited ground.

Hereinafter, the coupling unit 200 and the load support unit 300 will be described in more detail.

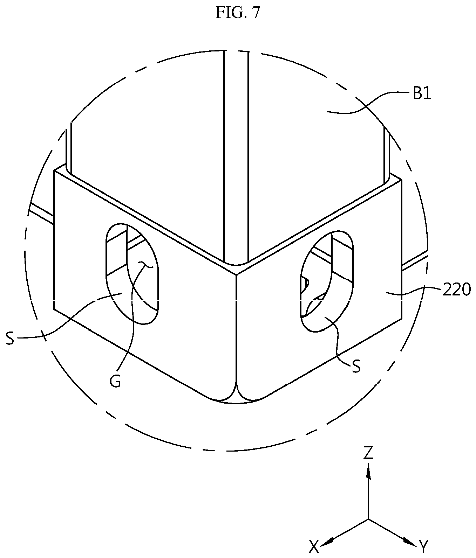

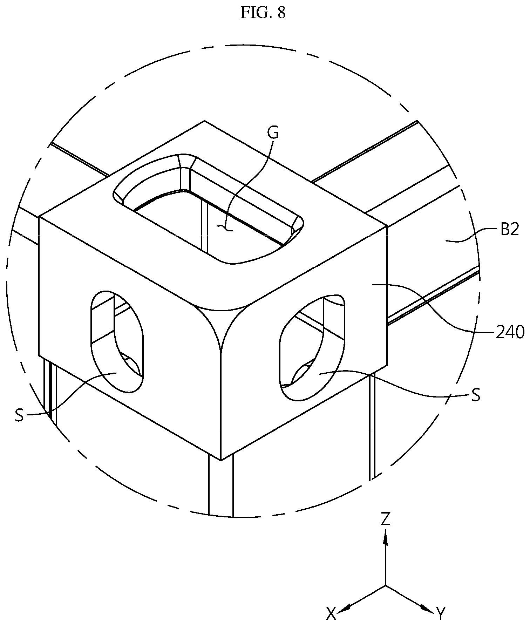

FIG. 7 is an enlarged view showing the portion A of FIG. 2, and FIG. 8 is an enlarged view showing the portion B of FIG. 2. Here, FIG. 7 is a diagram showing a first coupling unit 220 provided at the bottom end of the first container body B1 in detail, and FIG. 8 is a diagram showing a second coupling unit 240 provided at the top end of the second container body B2 in detail.

Referring to FIGS. 1 to 8, the coupling unit 200 may be provided to at least one of a top end and a bottom end of the container body 100.

The coupling unit 200 may be provided only at one of the top end and the bottom end of the container body 100. For example, the coupling unit 200 may be provided only at the bottom end of the first container body B 1, and may be provided only at the top end of the second container body B2.

Alternatively, the coupling unit 200 may be provided at both the top end and the bottom end of the container body 100. As an example, the coupling unit 200 may be provided at both the top end and the bottom end of the first container body B 1, and may be provided at both the top end and the bottom end of the second container body B2. At this time, the coupling unit 200 provided at the bottom end of the second container body B2 may be located on the ground.

The coupling unit 200 may include a first coupling unit 220 provided at the bottom end of the container body 100 and a second coupling unit 240 provided at the top end of the container body 100. At this time, the first coupling unit 220 and the second coupling unit 240 may be provided to both the first container body B1 and the second container body B2 described above. Meanwhile, the first coupling unit 220 described above may also be provided at the bottom end of the second container body B2 located on the ground.

In addition, the coupling unit 200 may be provided at a corner of the container body 100. More specifically, the first coupling unit 220 may be provided at the corner of the bottom end of the first container body B1 described above, and the second coupling unit 240 may be provided at the corner of the top end of the second container body B2 described above. At this time, the first coupling unit 220 and the second coupling unit 240 may be coupled to each other in the vertical direction.

In this way, the coupling unit 200 may be provided at the corner of the container body 100, which is the part where stress is most concentrated, to stably couple different container bodies 100.

In addition, the coupling unit 200 may be formed to extend further in the vertical direction than the top end or the bottom end of the container body 100. More specifically, the first coupling unit 220 may be formed to extend further downward than the bottom end of the first container body B1 described above, and the second coupling unit 240 may be formed to extend further upward than the top end of the second container body B2 described above.

In this way, since the coupling unit 200 is formed to extend further in the vertical direction than the top end or the bottom end of the container body 100, when different container bodies 100 are coupled, it is possible to prevent regions of different container bodies 100, except for the corners of the container bodies 100, from directly touching each other. Accordingly, it is possible to minimize the direct transfer of load to the battery modules arranged in the accommodation space of the container body 100.

Referring to FIGS. 1 to 6 again, the load support unit 300 may be provided to at least one of the top end and the bottom end of the container body 100.

The load support unit 300 may be provided only to one of the top end and the bottom end of the container body 100. As an example, the load support unit 300 may be provided only at the bottom end of the first container body B1 described above, and may be provided only at the top end of the second container body B2 described above.

Alternatively, the load support unit 300 may be provided at both the top end and the bottom end of the container body 100. As an example, the load support unit 300 may be provided at both the top end and the bottom end of the first container body B 1, and may be provided at both the top end and the bottom end of the second container body B2. At this time, the load support unit 300 coupled to the bottom end of the second container body B2 may be located on the ground.

The load support unit 300 may be configured to support the vertical load of two different container bodies 100.

More specifically, when the first container body B1 and the container body B2 described above are coupled to each other by the first coupling unit 220 and the second coupling unit 240, the load support unit 300 may additionally support the vertical load of the first container body B1 and the second container body B2.

According to this embodiment of the present disclosure, when two different container bodies 100 are coupled in the vertical direction, the vertical load of the container bodies 100 may be stably supported.

In addition, the load support unit 300 may be located between two different coupling units 200 on at least one of the upper surface and the lower surface of the container body 100.

More specifically, the load support unit 300 may be located between two different first coupling units 220 on the lower surface of the container body 100. At this time, the load support unit 300 may be located between two different first coupling units 220 in the length direction of the container body 100. In addition, although not shown, the load support unit 300 may be located between two different first coupling units 220 in the width direction of the container body 100, and may be located between two different first coupling units 220 located in the diagonal direction.

In addition, the load support unit 300 may be located between two different second coupling units 240 on the upper surface of the container body 100. At this time, the load support unit 300 may be located between two different second coupling units 240 in the length direction of the container body 100. In addition, although not shown, the load support unit 300 may be located between two different second coupling units 240 in the width direction of the container body 100, and may be located between two different second coupling units 240 located in the diagonal direction.

For example, as shown in FIGS. 1 to 6, since the length in the length direction of the container body 100 is formed to be longer than the length in the width direction, if the load support unit 300 is located between two different coupling units 200 in the length direction of the container body 100, a higher load support effect may be achieved. In addition, since the load support unit 300 is located between two different coupling units 200 in all of the length direction, the width direction, and the diagonal direction of the container body 100, the vertical load of the container bodies 100 may be supported more stably.

According to this embodiment of the present disclosure, since the load support unit 300 is located between the coupling units 200 that couple different container bodies 100 on at least one of the upper surface and the lower surface of the container body 100, the vertical load of the container bodies 100 may be supported more stably.

In particular, the load support unit 300 may be formed in plurality between two different coupling units 200. For example, a plurality of load support units 300 may be formed between two different coupling units 200 in the length direction of the container body 100. In addition, although not shown, a plurality of load support units 300 may be formed between two different coupling units 200 in the width direction of the container body 100, and a plurality of load support units 300 may be formed between two different coupling units 200 located in the diagonal direction.

Also, as shown in FIGS. 1 to 6, since the length in the length direction of the container body 100 is formed to be longer than the length in the width direction, if the plurality of load support units 300 are located between two different coupling units 200 in the length direction of the container body 100, a higher load support effect may be achieved. In addition, since the plurality of load support units 300 are located between two different coupling units 200 in all of the length direction, the width direction, and the diagonal direction of the container body 100, the vertical load of the container body 100 may be supported more stably.

According to this embodiment of the present disclosure, since a plurality of load support units 300 are formed between the coupling units 200 that couple different container bodies 100, the vertical load of the container bodies 100 may be distributed to the plurality of load support units 300. Accordingly, the vertical load of the container bodies 100 may be supported more stably.

In addition, the load support unit 300 may be located between two different coupling units 200 at the edge of the container body 100.

More specifically, the load support unit 300 may be located between two different coupling units 200 at the edge in the length direction of the container body 100. In addition, although not shown, the load support unit 300 may be located between two different coupling units 200 at the edge in the width direction of the container body 100.

According to this embodiment of the present disclosure, since the load support unit 300 is located between two different coupling units 200 at the edge of the container body 100, which is vulnerable to the vertical load, the vertical load of the container body 100 may be supported more stably.

In addition, the load support unit 300 may be located symmetrically at both sides of the edge of the container body 100 based on a center line of the edge of the container body 100.

More specifically, the load support unit 300 may be positioned symmetrically at both sides in the length direction based on the center line in the width direction at the edge of the container body 100 in the length direction. In addition, although not shown, the load support unit 300 may be positioned symmetrically at both sides in the width direction based on the center line in the length direction, at the edge of the container body 100 in the width direction.

According to this embodiment of the present disclosure, the vertical load of the container body 100 may be uniformly distributed to the load support unit 300. Accordingly, the vertical load of the container body 100 may be supported more stably.

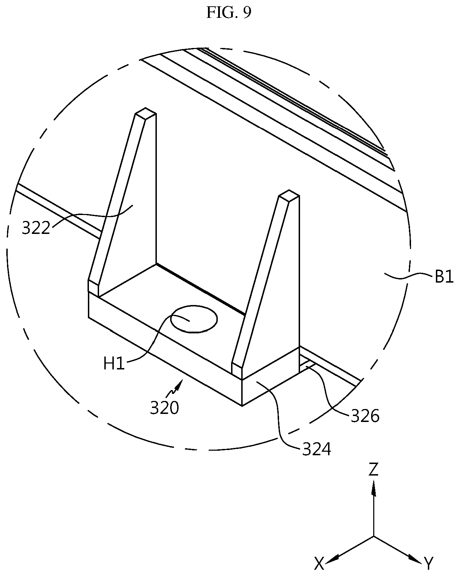

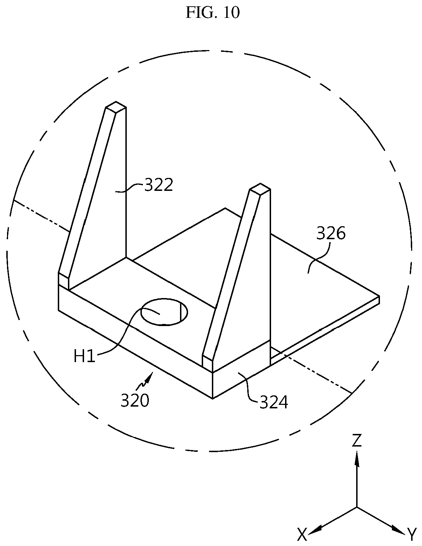

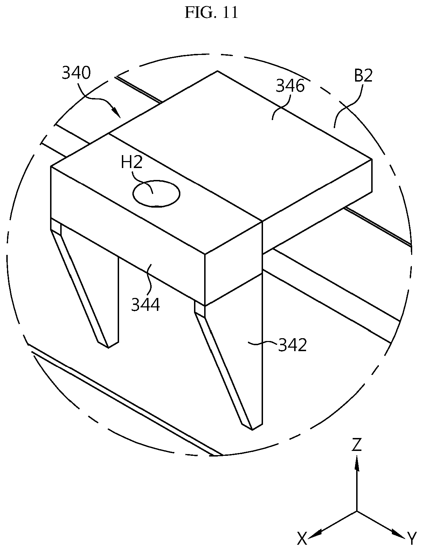

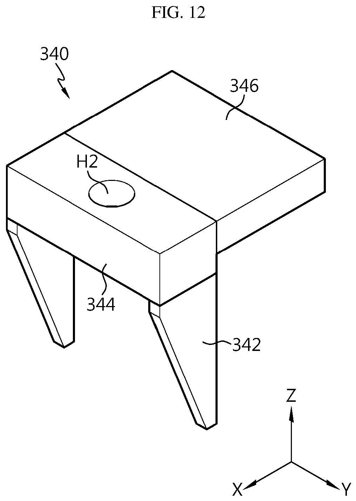

FIG. 9 is an enlarged view showing the portion C of FIG. 2, FIG. 10 is a diagram showing a first support bracket 320 in FIG. 9 in detail, FIG. 11 is an enlarged view showing the portion D of FIG. 2, and FIG. 12 is a diagram showing a second support bracket 340 in FIG. 11 in detail.

Referring to FIGS. 1 to 6 and 9 to 12, the load support unit 300 may include a first support bracket 320 and a second support bracket 340.

The first support bracket 320 may be provided at the bottom end of the container body 100. As an example, the first support bracket 320 may be provided at the bottom end of the first container body B1.

The second support bracket 340 may be provided at the top end of the container body 100. As an example, the second support bracket 340 may be provided at the top end of the second container body B2. Also, the second support bracket 340 may be configured to be coupled with the first support bracket 320 in the vertical direction.

The first support bracket 320 and the second support bracket 340 may be configured to support the vertical load of the first container body B1 and the second container body B2.

At this time, the first support bracket 320 and the second support bracket 340 may be provided to both the first container body B1 and the second container body B2 described above. Meanwhile, the first support bracket 320 described above may be provided at the bottom end of the second container body B2 located on the ground.

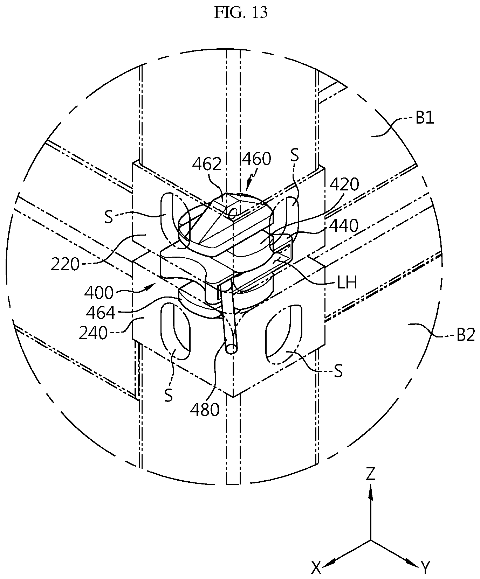

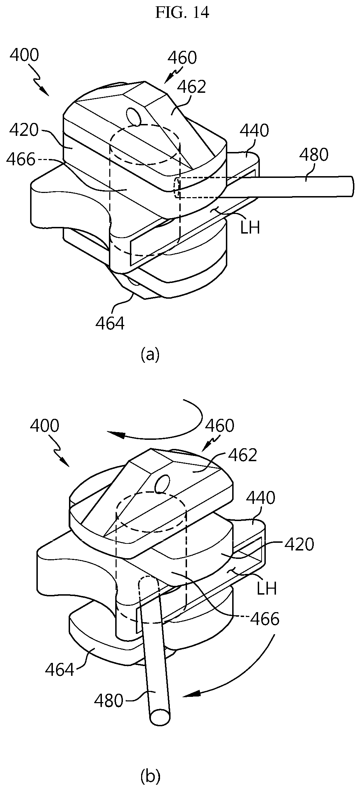

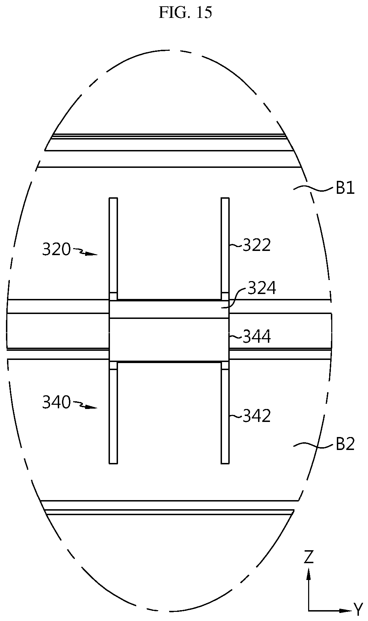

FIG. 13 is an enlarged view showing the portion L of FIG. 1, FIG. 14 is a diagram showing a connection member 400 in FIG. 13 in detail, and FIG. 15 is a diagram for illustrating a state in which a load support unit 300 supports the load of two different container bodies 100.

Referring to FIGS. 13 to 15, the battery container 10 may further include a connection member 400 configured to connect two different coupling units 200 in the vertical direction. As an example, the connection member 400 is a type of twist lock and may be made of a high-strength metal material.

The connection member 400 may include a connection body 420 and a side portion 440.

The connection body 420 may be disposed vertically inside two different coupling units 200. That is, the connection body 420 may be disposed vertically inside the first coupling unit 220 provided to the first container body B1 and the second coupling unit 240 provided to the second container body B2.

The side portion 440 may be formed at both sides of the connection body 420 and disposed between the two different coupling units 200 in the vertical direction. That is, the side portion 440 may be disposed between the first coupling unit 220 and the second coupling unit 240 in the vertical direction.

A more detailed configuration of the connection member 400 described above will be described later in more detail.

By the side portion 440, the connection member 400 may prevent the two different coupling units 200 coupled to the corner of the container body 100, which is the part where stress is most concentrated in the container body 100, from directly touching each other. Accordingly, different container bodies 100 may be connected stably.

Meanwhile, in a state where the side portion 440 is disposed between the two different coupling units 200, downward sagging may occur in the region of the first container body B1 excluding the area between the two different coupling units 200. At this time, the first support bracket 320 and the second support bracket 340 of the present disclosure may be coupled to each other in the vertical direction and configured to support the vertical load of the first container body B1 and the second container body B2.

According to this embodiment of the present disclosure, when two different container bodies 100 are coupled in the vertical direction, deformation of the container body 100 may be minimized and the vertical load of the container body 100 may be stably supported.

Referring to FIGS. 9 to 15 again, the first support bracket 320 may include a first side bracket 322, a first coupling bracket 324, and a first base bracket 326.

The first side bracket 322 may be coupled to a side surface of the bottom end of the container body 100. **In** this way, the first support bracket 320 may be more stably coupled to the container body 100 by providing the first side bracket 322 that is coupled to the side surface of the container body 100. Accordingly, the first support bracket 320 may support the vertical load of the container body 100 more stably.

The first coupling bracket 324 may be coupled to the lower portion of the first side bracket 322 and configured to be coupled with the second support bracket 340 in the vertical direction. **In** this way, the first support bracket 320 may be more stably coupled to the second support bracket 340 in the vertical direction by providing the first coupling bracket 324 coupled to the lower portion of the first side bracket 322.

The first base bracket 326 may be connected to the first coupling bracket 324 and configured to support the lower surface of the container body 100. **In** this way, the first support bracket 320 may support the vertical load of the container body 100 more stably by providing the first base bracket 326 configured to support the lower surface of the container body 100.

**In** addition, the second support bracket 340 may include a second side bracket 342, a second coupling bracket 344, and a second base bracket 346.

The second side bracket 342 may be coupled to a side surface of the top end of the container body 100. **In** this way, the second support bracket 340 may be more stably coupled to the container body 100 by providing the second side bracket 342 configured to be coupled to the side surface of the container body 100. Accordingly, the second support bracket 340 may support the vertical load of the container body 100 more stably.

The second coupling bracket 344 may be coupled to the upper portion of the second side bracket 342 and configured to be coupled with the first coupling bracket 324 in the vertical direction. As an example, the first coupling bracket 324 and the second coupling bracket 344 may be coupled as a separate coupling member (not shown) couples a first hole H1 formed in the first coupling bracket 324 and a second hole H2 formed in the second coupling bracket 344 with each other.

**In** this way, the second support bracket 340 may be more stably coupled to the first support bracket 320 in the vertical direction by providing the second coupling bracket 344 coupled to the upper portion of the second side bracket 342. **In** addition, since the first support bracket 320 and the second support bracket 340 have the first coupling bracket 324 and the second coupling bracket 344 configured to be easily coupled to each other in the vertical direction, different container bodies 100 may be easily coupled.

The second base bracket 346 may be connected to the second coupling bracket 344 and configured to support the upper surface of the container body 100. **In** this way, the second support bracket 340 may support the vertical load of the container body 100 more stably by providing the second base bracket 346 configured to support the upper surface of the container body 100.

Meanwhile, in a state where the side portion 440 is disposed between the two different coupling units 200, the gap between the bottom end of the first container body B1 and the top end of the second container body B2 may be equal to the sum of the heights of the first base bracket 326 and the second base bracket 346. Accordingly, the deformation of the container body 100 may be minimized, and the vertical load of the container body 100 may be stably supported.

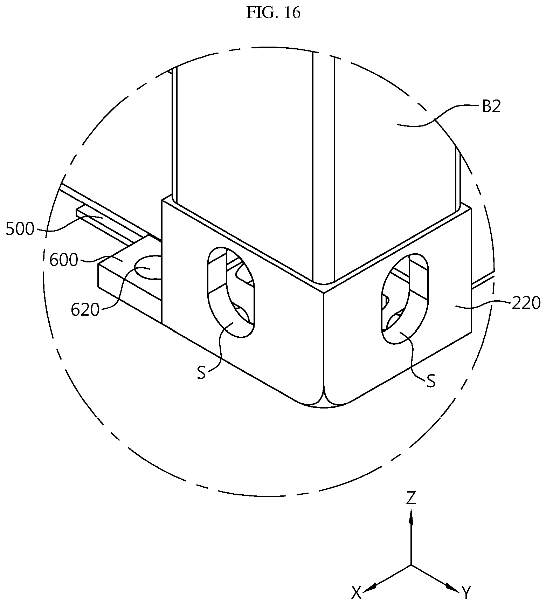

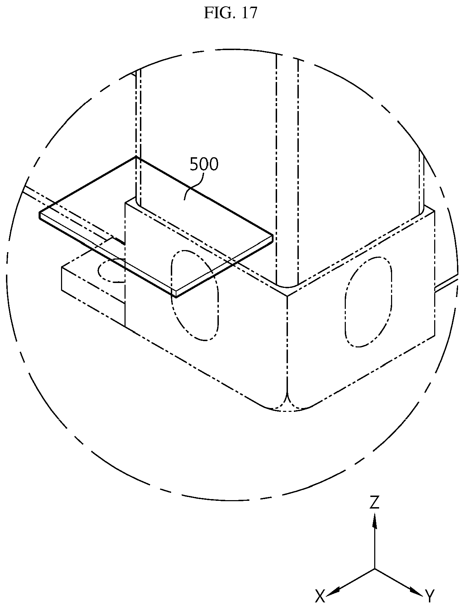

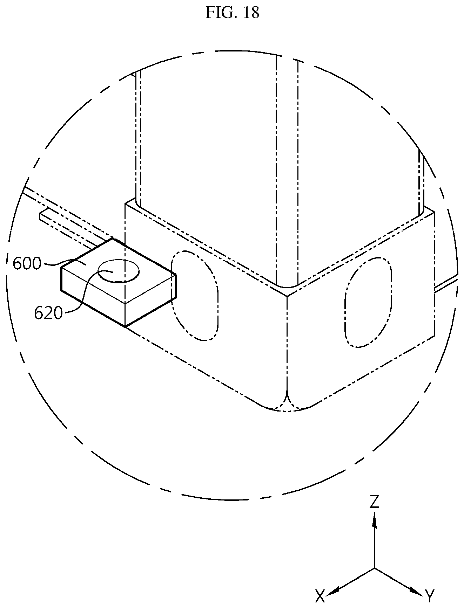

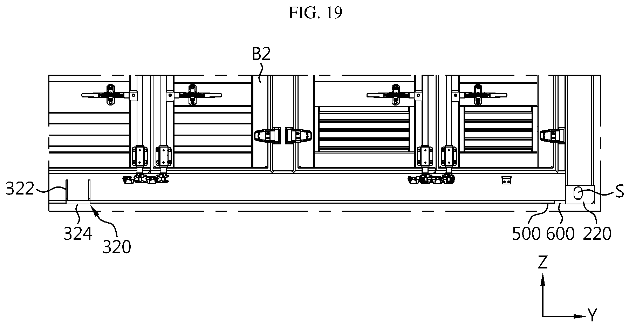

FIG. 16 is an enlarged view of part E of FIG. 2, FIG. 17 is a diagram showing a support plate 500 of FIG. 16 in detail, FIG. 18 is a diagram showing a fixing member 600 of FIG. 16 in detail, and FIG. 19 is a diagram for illustrating the relationship between the support plate 500 and the load support unit 30 of FIG. 16.

Referring to FIGS. 9 to 12 and 16 to 19, the load support unit 300 may be configured to support the container body 100 disposed on the ground.

More specifically, the second container body B2 described above may be located on the ground. At this time, among the coupling units 200, the first coupling unit 220 may be provided at the bottom end of the second container body B2 located on the ground. In addition, the first support bracket 320 of the load support unit 300 may be provided at the bottom end of the second container body B2 located on the ground.

In particular, the bottom end of the first coupling bracket 324 and the first base bracket 326 of the first support bracket 320 may be located on the same horizontal plane as the bottom end of the first coupling unit 220. Also, the first support bracket 320 may be fixed to the ground by inserting a separate coupling member (not shown) into the ground through the first hole H1 of the first coupling bracket 324. Accordingly, the second container body B2 located on the ground may be fixed to the ground.

According to this embodiment of the present disclosure, the load support unit 300 may stably support the container body 100 disposed on the ground, thereby enabling stable stacking of the container bodies 100.

Meanwhile, the battery container 10 may further include a support plate 500. The support plate 500 may be configured to support the container body 100 disposed on the ground.

At this time, the support plate 500 may support the bottom end of the container body 100 disposed on the ground. More specifically, the support plate 500 may support the bottom end of the second container body B2 located on the ground.

In particular, the support plate 500 may be directly connected to the first coupling unit 220 or may be disposed adjacent to the first coupling unit 220. By this configuration of the support plate 500, it is possible to additionally secure the support force in the vertical direction near the corner of the container body 100.

**In** addition, the bottom end of the support plate 500 may be located on the same horizontal plane as the bottom end of the first coupling unit 220, and may be located on the same horizontal plane as the bottom end of the first coupling bracket 324 and the first base bracket 326 of the first support bracket 320.

According to this embodiment of the present disclosure, since the support plate 500 is configured to additionally support the container body 100 disposed on the ground in addition to the load support unit 300, it is possible to guide more stable stacking of the container bodies 100.

Referring to FIGS. 16 to 19 again, the battery container 10 may further include a fixing member 600.

The fixing member 600 may be configured to connect the support plate 500 and the coupling unit 200. Since the support plate 500 and the coupling unit 200 are connected to each other by the fixing member 600 in this way, the support force in the vertical direction near the corner of the container body 100 may be more stably achieved.

**In** addition, the fixing member 600 may be configured to fix the container body 100 to the ground. More specifically, the fixing member 600 may fix the second container body B2 located on the ground to the ground. As an example, a separate coupling member (not shown) may be inserted into the ground through a fixing hole 620 formed in the fixing member 600. Accordingly, the fixing member 600 may fix the second container body B2 located on the ground to the ground.

At this time, the bottom end of the fixing member 600 may be located on the same horizontal plane as the bottom end of the first coupling unit 220, and may be located on the same horizontal plane as the bottom end of the support plate 500. In addition, the bottom end of the fixing member 600 may be located on the same horizontal plane as the bottom end of the first coupling bracket 324 and the first base bracket 326 of the first support bracket 320.

According to this embodiment of the present disclosure, by using the fixing member 600, not only more stable stacking of the container bodies 100 may be guided, but also an additional force for fixing the container bodies 100 to the ground may be secured.

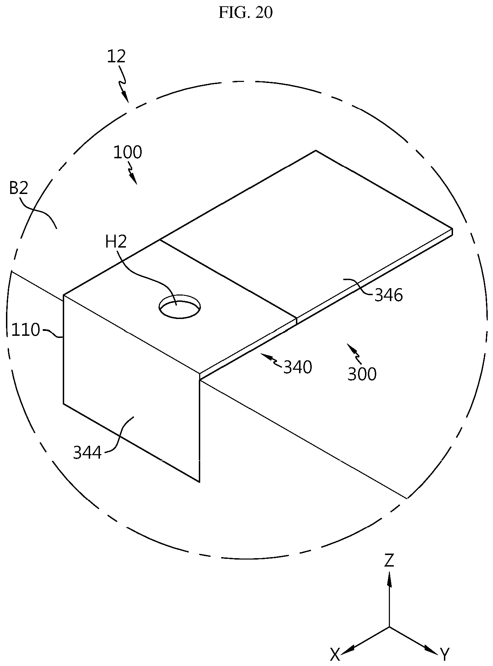

FIGS. 20 to 23 are diagrams showing a battery container according to another embodiment of the present disclosure. Hereinafter, FIGS. 20 to 23 will show only some components of the battery container described above.

Referring to FIG. 20, the battery container 12 according to the second embodiment of the present disclosure is shown. Since the battery container 12 according to this embodiment is similar to the battery container 10 of the former embodiment, features substantially identical or similar to those of the former embodiment will not be described in detail, and features different from those of the former embodiment will be described in detail.

Referring to FIG. 20, the battery container 12 may include a container body 100 and a load support unit 300.

In the battery container 12 according to this embodiment, the container body 100 may further include a seating groove 110, unlike the former embodiment. The seating groove 110 may be formed on at least one of the top end and the bottom end of the container body 100. In addition, the load support unit 300 may be located in the seating groove 110.

As an example, at least one seating groove 110 may be formed at the top end of the second container body B2 described above along the length direction of the second container body B2. The seating groove 110 may be formed to be indented inward in the width direction of the second container body B2.

In addition, the second coupling bracket 344 of the second support bracket 340 may be disposed in the seating groove 110. Also, the second base bracket 346 of the second support bracket 340 may be connected to the second coupling bracket 344 and configured to support the upper surface of the second container body B2. Meanwhile, in the battery container 12 according to this embodiment, the container body 100 may not include a second side bracket 342, unlike the former embodiment.

According to the battery container 12 of this embodiment, the load support unit 300 may be configured more simply, and the load support unit 300 may support the vertical load of the container body 100 more stably.

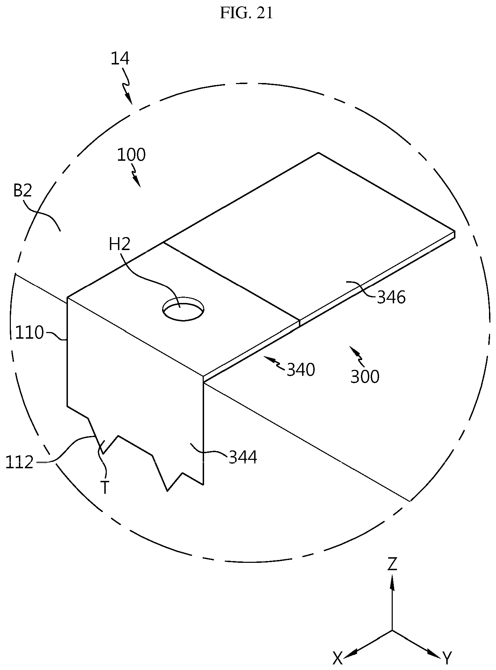

Referring to FIG. 21, the battery container 14 according to the third embodiment of the present disclosure is shown. Since the battery container 14 according to this embodiment is similar to the battery container 10 of the former embodiment, features substantially identical or similar to those of the former embodiment will not be described in detail, and features different from those of the former embodiment will be described in detail.

Referring to FIG. 21, the battery container 14 may include a container body 100 and a load support unit 300.

In the battery container 14 according to this embodiment, the seating groove 110 may further include a guide groove 112. The guide groove 112 may be formed to be indented to a certain depth in the seating groove 110 in the vertical direction. A part of the load support unit 300 may be inserted into the guide groove 112.

As an example, the second coupling bracket 344 of the second support bracket 340 may be disposed in the seating groove 110. In addition, a protrusion T having a shape corresponding to the guide groove 112 may be formed at one side of the second coupling bracket 344. The protrusion T may be inserted into the guide groove 112.

According to the battery container 14 of this embodiment, since the load support unit 300 may be positioned more stably in the seating groove 110, the load support unit 300 may support the vertical load of the container body 100 more stably.

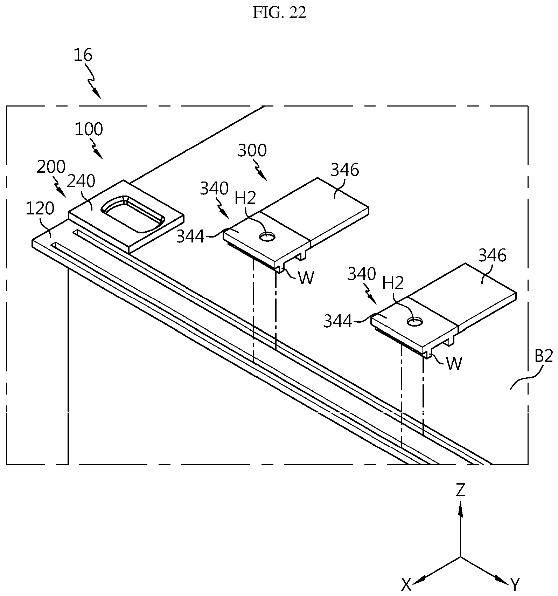

Referring to FIG. 22, the battery container 16 according to the fourth embodiment of the present disclosure is shown. Since the battery container 16 according to this embodiment is similar to the battery container 10 of the former embodiment, features substantially identical or similar to those of the former embodiment will not be described in detail, and features different from those of the former embodiment will be described in detail.

Referring to FIG. 22, the battery container 16 may include a container body 100 and a load support unit 300.

In the battery container 16 according to this embodiment, the container body 100 may further include a slide guide 120, unlike the former embodiment. The slide guide 120 may be formed on at least one of the top end and the bottom end of the container body 100. The slide guide 120 may be formed in the form of a guide rail.

In addition, a plurality of load support units 300 may be arranged on the slide guide 120 and configured to move on the container body 100, and each load support unit 300 may be fixed at a specific position of the slide guide 120 by a separate stopper (not shown).

As an example, the slide guide 120 may be formed at the top end of the second container body B2 described above along the length direction of the second container body B2.

In addition, the second coupling bracket 344 of the second support bracket 340 may be coupled to the slide guide 120. At this time, a groove W having a shape corresponding to the slide guide 120 may be formed at one side of the second coupling bracket 344. The second coupling bracket 344 may be coupled to the slide guide 120 through the groove W.

In addition, the second coupling bracket 344 may be configured to move on the second container body B2 along the slide guide 120, and each second coupling bracket 344 may be fixed at a specific position of the slide guide 120 by the stopper.

Meanwhile, in the battery container 16 according to this embodiment, the container body 100 may not include the second side bracket 342.

According to the battery container 16 of this embodiment, since the load support unit 300 may freely move on the container body 100 through the slide guide 120, the plurality of load support units 300 may be disposed at any positions of the container body 100. Accordingly, the vertical load of the container body 100 may be supported more stably.

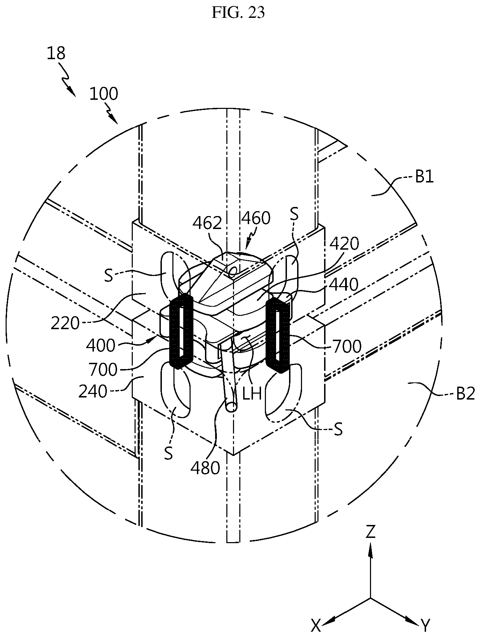

Referring to FIG. 23, the battery container 18 according to the fifth embodiment of the present disclosure is shown. Since the battery container 18 according to this embodiment is similar to the battery container 10 of the former embodiment, features substantially identical or similar to those of the former embodiment will not be described in detail, and features different from those of the former embodiment will be described in detail.

Referring to FIGS. 7, 8, and 23, the battery container 18 may include a container body 100 and a coupling unit 200.

Here, the coupling unit 200 may further have a side hole S. The side hole S may be formed in the side surface of the coupling unit 200 along the vertical direction.

In addition, the battery container 18 according to this embodiment may further include a reinforcing member 700, unlike the former embodiment.

The reinforcing member 700 may connect the side holes S of two different coupling units 200 in the vertical direction.

As an example, the reinforcing member 700 may connect the side hole S formed in the side surface of the first coupling unit 220 coupled to the first container body B1 and the side hole S formed in the side surface of the second coupling unit 240 coupled to the second container body B2 in the vertical direction. As an example, the reinforcing member 700 may be made of an elastic material and may be formed in a clip shape to facilitate attachment and detachment to/from the side hole S.

According to the battery container 18 of this embodiment, the support force in the vertical direction may be additionally secured at the corner of the container body 100, and also more stable stacking of the container bodies 100 may be guided.

As discussed above, according to the embodiment of the present disclosure, when different container bodies 100 are coupled in the vertical direction, the vertical load of the container bodies 100 may be stably supported.

In addition, according to the embodiment of the present disclosure, since the container bodies 100 may be stably stacked on the same ground, the energy density of the battery container 10, 12, 14, 16, 18 may be improved in a limited ground.

Referring to FIGS. 13 and 14 again, the connection member 400 may further include a locking unit 460 and a handle portion 480.

The locking unit 460 may be configured to fix the connection body 420 of the connection member 400 to the interior of the coupling units 200.

The handle portion 480 may be connected to the locking unit 460 and may have a long bar shape. The handle portion 480 may be configured to rotate the locking unit 460 with respect to the connection body 420 according to movement on a horizontal plane within an elongated hole LH formed at one side of the connection body 420.

That is, the handle portion 480 may act to fix the connection body 420 to the interior of the coupling units 200 through the locking unit 460 by rotating the locking unit 460 with respect to the connection body 420.

More specifically, the locking unit 460 may include a first locking member 462, a second locking member 464, and a rotary shaft 466.

The first locking member 462 may be disposed at the upper portion of the connection body 420.

The second locking member 464 may be disposed at the lower portion of the connection body 420.

The rotary shaft 466 may be formed inside the connection body 420 and connect the first locking member 462 and the second locking member 464.

The coupling unit 200 described above may further include a perforated hole G. The perforated hole G is formed at one side of the coupling unit 200 in the vertical direction, and the first locking member 462 or the second locking member 464 may pass through the perforated hole G.

In addition, the rotary shaft 466 may be connected to the handle portion 480 and configured to rotate with respect to the connection body 420 according to the driving of the handle portion 480. At this time, the first locking member 462 and the second locking member 464 may be rotated on the horizontal plane according to the rotation of the rotary shaft 466.

According to the rotation of the rotary shaft 466, the first locking member 462 and the second locking member 464 may be converted from the state of FIG. 14(a) to FIG. 14(b), so as to be arranged in a direction perpendicular to the perforated hole G inside the coupling units 200. In this state, the first locking member 462 and the second locking member 464 may be prevented from passing through the perforated hole G. Accordingly, the connection body 420 may be fixed inside the coupling units 200.

Meanwhile, at least one battery containers 10, 12, 14, 16, 18 described above may be provided to form an energy storage system 1. As described above, the energy storage system 1 may form a link group by combining a certain number of battery containers 10 and a control container EL.

Referring to FIG. 1 again, as an example, four container bodies 100 and two control containers EL are provided. In one embodiment, two container bodies 100 and one control container EL may constitute one link group. However, the present disclosure is not limited thereto, and when three or more container bodies 100 are stacked, it is also possible that three or more container bodies 100 and one control container EL form one link group.

Meanwhile, in each link group, the container body 100 located on the ground may be connected to one control container EL. The control container EL may perform overall control or diagnosis for the container bodies 100 that are stacked.

In addition, the control container EL may include a DC part, an AC part, and a BSC part to control the battery container. Meanwhile, each control container EL may be connected to the PCS.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

### Reference Signs

1: energy storage system
10, 12, 14, 16, 18: battery container
100: container body
200: coupling unit
300: load support unit
320: first support bracket
322: first side bracket
324: first coupling bracket
326: first base bracket
340: second support bracket
342: second side bracket
344: second coupling bracket
346: second base bracket
400: connection member
500: support plate
600: fixing member

## Claims

1. A battery container (10), comprising:
a container body (100);
a coupling unit (200) configured to couple different container bodies (100); and
a load support unit (300) configured to support a vertical load of the container body (100),
wherein the load support unit (300) includes:
a first support bracket (320) provided at the bottom end of the container body (100); and
a second support bracket (340) provided at the top end of the container body (100) and configured to be coupled with the first support bracket (320) in a vertical direction,
wherein the first support bracket (320) includes:
a first side bracket (322) coupled to a side surface of the bottom end of the container body (100);
a first coupling bracket (324) coupled to a lower portion of the first side bracket (322) and configured to be coupled with the second support bracket (340) in the vertical direction; and
a first base bracket (326) connected to the first coupling bracket (324) and configured to support a lower surface of the container body (100).

2. The battery container according to claim 1,
wherein the coupling unit (200) is provided to at least one of a top end and a bottom end of the container body (100) and provided at a corner of the container body (100).

3. The battery container according to claim 2,
wherein the coupling unit (200) is formed to extend further in a vertical direction than the top end or the bottom end of the container body (100).

4. The battery container according to claim 1,
wherein the load support unit (300) is provided to at least one of a top end and a bottom end of the container body (100) and configured to support the vertical load of two different container bodies (100).

5. The battery container according to claim 1,
wherein the second support bracket (340) includes:
a second side bracket (342) coupled to a side surface of the top end of the container body (100);
a second coupling bracket (344) coupled to an upper portion of the second side bracket (342) and configured to be coupled with the first coupling bracket (324) in the vertical direction; and
a second base bracket (346) connected to the second coupling bracket (344) and configured to support an upper surface of the container body (100).

6. The battery container according to claim 1,
wherein the load support unit (300) is located between two different coupling units (200) on at least one of an upper surface and a lower surface of the container body (100).

7. The battery container according to claim 6,
wherein the load support unit (300) is formed in plurality between the two different coupling units (200).

8. The battery container according to claim 1,
wherein the load support unit (300) is located between the two different coupling units (200) at an edge of the container body (100).

9. The battery container according to claim 1,
wherein the load support unit (300) is located symmetrically at both sides of an edge of the container body (100) based on a center line of the edge of the container body (100).

10. The battery container according to claim 1,
wherein the load support unit (300) is configured to support the container body (100) disposed on the ground.

11. The battery container according to claim 1, further comprising:
a support plate (500) configured to support the container body (100) disposed on the ground.

12. The battery container according to claim 11, further comprising:
a fixing member (600) configured to connect the support plate (500) and the coupling unit (200),
wherein the fixing member (600) is configured to fix the container body (100) to the ground.

13. An energy storage system, comprising at least one battery container according to any one of claims 1 to 12.

## Patentansprüche

1. Batteriecontainer (10), umfassend:
einen Containerkörper (100);
eine Kopplungseinheit (200), die konfiguriert ist, um verschiedene Containerkörper (100) zu koppeln; und
eine Lasttrageeinheit (300), die konfiguriert ist, um eine vertikale Last des Containerkörpers (100) zu tragen,
wobei die Lasttrageeinheit (300) einschließt:
eine erste Tragehalterung (320), die am unteren Ende des Containerkörpers (100) bereitgestellt ist; und
eine zweite Tragehalterung (340), die am oberen Ende des Containerkörpers (100) bereitgestellt und konfiguriert ist, um mit der ersten Tragehalterung (320) in einer vertikalen Richtung gekoppelt zu werden,
wobei die erste Tragehalterung (320) einschließt:
eine erste Seitenhalterung (322), die mit einer Seitenfläche des unteren Endes des Containerkörpers (100) gekoppelt ist;
eine erste Kopplungshalterung (324), die mit einem unteren Abschnitt der ersten Seitenhalterung (322) gekoppelt und konfiguriert ist, um mit der zweiten Tragehalterung (340) in der vertikalen Richtung gekoppelt zu werden; und
eine erste Basishalterung (326), die mit der ersten Kopplungshalterung (324) verbunden und konfiguriert ist, um eine untere Fläche des Containerkörpers (100) zu tragen.

2. Batteriecontainer nach Anspruch 1,
wobei die Kopplungseinheit (200) an mindestens einem von einem oberen Ende und einem unteren Ende des Containerkörpers (100) und an einer Ecke des Containerkörpers (100) bereitgestellt ist.

3. Batteriecontainer nach Anspruch 2,
wobei die Kopplungseinheit (200) so ausgebildet ist, dass sie sich in einer vertikalen Richtung weiter erstreckt als das obere Ende oder das untere Ende des Containerkörpers (100).

4. Batteriecontainer nach Anspruch 1,
wobei die Lasttrageeinheit (300) an mindestens einem von einem oberen Ende und einem unteren Ende des Containerkörpers (100) bereitgestellt und konfiguriert ist, um die vertikale Last von zwei verschiedenen Containerkörpern (100) zu tragen.

5. Batteriecontainer nach Anspruch 1,
wobei die zweite Tragehalterung (340) einschließt:
eine zweite Seitenhalterung (342), die mit einer Seitenfläche des oberen Endes des Containerkörpers (100) gekoppelt ist;
eine zweite Kopplungshalterung (344), die mit einem oberen Abschnitt der zweiten Seitenhalterung (342) gekoppelt und konfiguriert ist, um mit der ersten Kopplungshalterung (324) in der vertikalen Richtung gekoppelt zu werden; und
eine zweite Basishalterung (346), die mit der zweiten Kopplungshalterung (344) verbunden und konfiguriert ist, um eine obere Fläche des Containerkörpers (100) zu tragen.

6. Batteriecontainer nach Anspruch 1,
wobei sich die Lasttrageeinheit (300) zwischen zwei verschiedenen Kopplungseinheiten (200) an mindestens einer von einer oberen Fläche und einer unteren Fläche des Containerkörpers (100) befindet.

7. Batteriecontainer nach Anspruch 6,
wobei die Lasttrageeinheit (300) in einer Vielzahl zwischen den zwei verschiedenen Kopplungseinheiten (200) ausgebildet ist.

8. Batteriecontainer nach Anspruch 1,
wobei sich die Lasttrageeinheit (300) zwischen den zwei verschiedenen Kopplungseinheiten (200) an einer Kante des Containerkörpers (100) befindet.

9. Batteriecontainer nach Anspruch 1,
wobei sich die Lasttrageeinheit (300) symmetrisch auf beiden Seiten einer Kante des Containerkörpers (100) auf der Grundlage einer Mittellinie der Kante des Containerkörpers (100) befindet.

10. Batteriecontainer nach Anspruch 1,
wobei die Lasttrageeinheit (300) konfiguriert ist, um den auf dem Boden angeordneten Containerkörper (100) zu tragen.

11. Batteriecontainer nach Anspruch 1, weiter umfassend:
eine Trageplatte (500), die konfiguriert ist, um den auf dem Boden angeordneten Containerkörper (100) zu tragen.

12. Batteriecontainer nach Anspruch 11, weiter umfassend:
ein Befestigungselement (600), das konfiguriert ist, um die Trageplatte (500) und die Kopplungseinheit (200) zu verbinden,
wobei das Befestigungselement (600) konfiguriert ist, um den Containerkörper (100) am Boden zu befestigen.

13. Energiespeichersystem, umfassend mindestens einen Batteriecontainer nach einem der Ansprüche 1 bis 12.

## Revendications

1. Conteneur de batterie (10), comprenant :
un corps de conteneur (100) ;
une unité de couplage (200) configurée pour coupler différents corps de conteneur (100) ; et
une unité de support de charge (300) configurée pour supporter une charge verticale du corps de conteneur (100),
dans lequel l'unité de support de charge (300) inclut :
un premier support de soutien (320) prévu à l'extrémité inférieure du corps de conteneur (100) ; et
un second support de soutien (340) prévu à l'extrémité supérieure du corps de conteneur (100) et configuré pour être couplé avec le premier support de soutien (320) dans une direction verticale,
dans lequel le premier support de soutien (320) inclut :
un premier support latéral (322) couplé à une surface latérale de l'extrémité inférieure du corps de conteneur (100) ;
un premier support de couplage (324) couplé à une partie inférieure du premier support latéral (322) et configuré pour être couplé avec le second support de soutien (340) dans la direction verticale ; et
un premier support de base (326) connecté au premier support de couplage (324) et configuré pour supporter une surface inférieure du corps de conteneur (100).

2. Le conteneur de batterie selon la revendication 1,
dans lequel l'unité de couplage (200) est prévue sur au moins une d'une extrémité supérieure et d'une extrémité inférieure du corps de conteneur (100) et prévue à un coin du corps de conteneur (100).

3. Le conteneur de batterie selon la revendication 2,
dans lequel l'unité de couplage (200) est formée pour s'étendre davantage dans une direction verticale que l'extrémité supérieure ou l'extrémité inférieure du corps de conteneur (100).

4. Le conteneur de batterie selon la revendication 1,
dans lequel l'unité de support de charge (300) est prévue sur au moins une d'une extrémité supérieure et d'une extrémité inférieure du corps de conteneur (100) et configurée pour supporter la charge verticale de deux corps de conteneur (100) différents.

5. Le conteneur de batterie selon la revendication 1,
dans lequel le second support de soutien (340) inclut :
un second support latéral (342) couplé à une surface latérale de l'extrémité supérieure du corps de conteneur (100) ;
un second support de couplage (344) couplé à une partie supérieure du second support latéral (342) et configuré pour être couplé avec le premier support de couplage (324) dans la direction verticale ; et
un second support de base (346) connecté au second support de couplage (344) et configuré pour supporter une surface supérieure du corps de conteneur (100).

6. Le conteneur de batterie selon la revendication 1,
dans lequel l'unité de support de charge (300) est située entre deux unités de couplage (200) différentes sur au moins une d'une surface supérieure et d'une surface inférieure du corps de conteneur (100).

7. Le conteneur de batterie selon la revendication 6,
dans lequel l'unité de support de charge (300) est formée en pluralité entre les deux unités de couplage (200) différentes.

8. Le conteneur de batterie selon la revendication 1,
dans lequel l'unité de support de charge (300) est située entre les deux unités de couplage (200) différentes à un bord du corps de conteneur (100).

9. Le conteneur de batterie selon la revendication 1,
dans lequel l'unité de support de charge (300) est située symétriquement des deux côtés d'un bord du corps de conteneur (100) sur la base d'une ligne centrale du bord du corps de conteneur (100).

10. Le conteneur de batterie selon la revendication 1,
dans lequel l'unité de support de charge (300) est configurée pour supporter le corps de conteneur (100) disposé sur le sol.

11. Le conteneur de batterie selon la revendication 1, comprenant en outre :
une plaque de support (500) configurée pour supporter le corps de conteneur (100) disposé sur le sol.

12. Le conteneur de batterie selon la revendication 11, comprenant en outre :
un élément de fixation (600) configuré pour connecter la plaque de support (500) et l'unité de couplage (200),
dans lequel l'élément de fixation (600) est configuré pour fixer le corps de conteneur (100) au sol.

13. Un système de stockage d'énergie, comprenant au moins un conteneur de batterie selon l'une quelconque des revendications 1 à 12.
